# EUROPEAN PATENT APPLICATION

(11) **EP 3 136 152 A1**
(43) Date of publication of application: **01.03.2017**
(21) Application number: 14889788.7
(22) Date of filing: 22.04.2014
(51) Int. Cl.: G02B 26/02, G02F 1/167

(54) **DISPLAY STRUCTURE HAVING PAPER EFFECT AND MANUFACTURING METHOD THEREFOR**

(71) Applicant: Shenzhen Guohua Optoelectronics Co., Ltd., Shenzhen, Guangdong 518110 (CN); South China Normal University, Guangzhou, Guangdong 510006 (CN); Shenzhen Guohua Optoelectronics Institute, Shenzhen, Guangdong 518110 (CN)
(72) Inventor: ZHOU, Guofu, Guangzhou Guangdong 510006 (CN); HAYES, Robert Andrew, Guangzhou Guangdong 510006 (CN); GROENEWOLD, Jan, Guangzhou Guangdong 510006 (CN)
(74) Representative: Stöckeler, Ferdinand
(86) International application number: PCT/CN2014/075900
(87) International publication number: WO 2015/161433

(57) **Abstract**

A display structure having a paper effect. The display structure comprises panel glass (1), a display layer (2) and substrate glass (3), wherein a paper layer (4) is provided under the substrate glass, and the panel glass (1), the display layer (2), the substrate glass (3) and the paper layer (4) are stacked in sequence. Also provided are an electrowetting display structure based on the display structure and a method for manufacturing the display structure having a paper effect. A piece of high-quality paper is placed under a substrate of the existing display structure as a diffuse reflection layer or a diffuse reflector, so as to provide required diffuse reflection and contrast approximate to paper. Compared with vacuum coating, the process is simpler, and avoids the expensive vacuum coating process, thereby greatly reducing manufacturing costs.

## Description

### TECHNICAL FIELD

The invention relates to a display structure, in particular to a display structure having paper effect.

### BACKGROUND

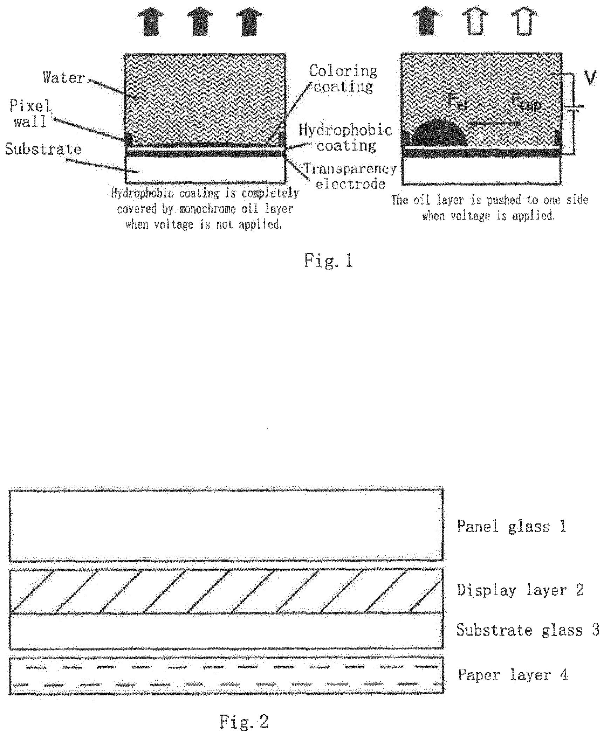

At present, a panel display structure is generally adopted in a display unit used for characters, images, videos and interaction interface. The panel display structures, such as electro fluidic display system (EFD), electrophoretic display system, in-plane switching (IPS), electro-osmosis display system and liquid crystal display (LCD), are widely used in the field. A part of the display structures adopts reflection display, for example, EFD applied to E ink or electronic paper. The EFD is also called as electrowetting display, where the electrowetting refers to a phenomenon that the wettability of droplets on the substrate is changed, i.e., a contact angle is changed to deform and shift the droplets, by varying a voltage between the droplets and the insulating substrate. By wetting it refers to a process that one fluid on a solid surface is replaced by another fluid. Liquid can spread on the solid surface, and the solid-liquid contact surface has a tendency of expanding, i.e., the adhesive force of the liquid to the solid surface is larger than its cohesive force, which is wetting. Non-wetting refers to the liquid cannot spread on the solid surface and the contact surface has a tendency of shrinking into a sphere, i.e., non-wetting is the result of the adhesive force of the liquid to the solid surface is smaller than its cohesive force. The wetting effect of a water-resistant surface can be changed by voltage (so it can be called electrowetting) to make the surface more hydrophilic (wetter). Since the originally hydrophobic surface becomes more hydrophilic now, the form of the inert liquid, for example an oil layer, which well contact with the hydrophobic surface has to be changed. Such interaction attribute control is the basis for the application of electrowetting. The application of electrowetting principle is described in detailed in publication document WO03071347 and the content issued in paper 425383385 of the publication *〈〈Nature〉〉.* Referring to the principle structure diagram of wetting as shown in Fig. 1, when the electrode is applied with voltage V, charges are accumulated at the lower surface of the water layer, then its electrostatic force Fel overcomes the capacitance force Fcap and breaks through the oil layer, and the hydrophobic coating on the substrate is covered, such that the water layer contacts with the original hydrophobic coating under the action of voltage. By further increasing the voltage, the oil layer broken through can be pushed to one corner of the pixel region. If the voltage is removed, the compressed oil will return to the state before the voltage is applied.

Compared with other display technologies, the EFD and its structure have many advantages, since it has both high photoelectric efficiency and switching speed. The EFD unit is a variable aperture filter in nature. In on-state driven by voltage, its visual appearance depends on the reflection material displayed when the color oil layer is faded. A good reflection material can provide a better diffuse reflection effect for a display unit to restore a simulation effect that a user reads on a paper, meanwhile a better contrast ratio can also be provided.

In the existing electronic paper, as a transverse drive principle is required for implementing the transparent EPD, A1 and Ag coatings are usually applied to bottom glass layer in a transparent display to form a mirror surface or a reflection surface, which greatly differs from a real paper.

The display screens realizing the paper simulation effects in market at present involve E ink or electronic paper display screens from Sony, Amazon kindle and the like, which are based on the EPD principle, and generally on the vertical or longitudinal drive principle based on the EPD, i.e., they are implemented as a reflection (non-transparent) display system. The paper effect is realized by forming a coating on the substrate using a vacuum coating process, for example spraying Ti02 particles. The Ti02 coating process is to approximate to paper effect as much as possible, but it leads to low reflection ratio, unsatisfactory contrast ratio and high cost.

### SUMMARY OF THE INVENTION

The invention provides a display structure having paper effect and a manufacturing method therefor, to overcome the defects due to the technical problems in prior art.

In order to achieve the objective, the following technical solutions are used in the invention.

According to one aspect of the invention, a display structure having paper effect is provided, wherein the display structure comprises panel glass, a display layer and substrate glass, and wherein a paper layer is arranged under the substrate glass, and the panel glass, the display layer, the substrate glass and the paper layer are stacked in sequence.

Preferably, the paper layer including paper used as a reflector which enables a diffuse reflection from the incident light.

Preferably, the thickness of the substrate glass is less than 0.5 mm.

Preferably, an adhesive layer for adhering the paper layer to a substrate side of the display structure is arranged between the substrate and paper layer.

Preferably, the optical property of the adhesive layer is adapted to transmit the incident light and emergent light to penetrate through the adhesive layer.

According to another aspect of the present invention, an electrowetting display structure is provided. The specific structure of the electrowetting display structure is similar to the display structure having paper effect, wherein in the electrowetting display structure, the display layer is an EFD switch layer.

According to yet another aspect of the invention, a method for manufacturing the display structure having the paper effect is provided, and the method comprises the following steps: arranging a display layer on the substrate glass; arranging panel glass on the display layer; arranging an adhesive layer at one side of the substrate glass away from the display layer; and arranging a paper layer at one side of the adhesive layer away from the substrate glass, wherein the optical property of the adhesive layer is adapted to transmit the incident light and emergent light to penetrate through the adhesive layer.

Preferably, the thickness of the substrate glass is set to less than 0.5 mm.

Preferably, the paper layer comprise paper used as a reflector which enables a diffuse reflection from the incident light.

According to the invention, display structure and manufacturing method can used on any non-transparent display technology, including but not limited to electrowetting display system, Electro fluidic display system, Electrophoretic display system, In-Plane-Switching, Electro-osmosis display system and liquid crystal display.

Compared with the prior art, the invention has the following significant advantages and beneficial effects:
according to the display structure and the manufacturing method, provided by the invention, the high-quality paper is arranged under the substrate of the existing display structure as the diffuse reflection layer or the reflector, thereby providing the needed diffuse reflection and contrast ratio approaching to the paper. The traditional paper is integrated on the rear face of a transparent display panel or the back surface of the substrate, thereby achieving an electronic display screen completely inheriting the traditional paper. Compared with the existing vacuum coating technique, such as applying a Ti02 coating film, the manufacturing technique provided by the present invention is simpler; the expensive vacuum coating technique is avoided, so that the manufacturing costs are greatly reduced.

### BRIEF DESCRIPTIONS OF THE DRAWINGS

Embodiments of the invention will be described in detail in combination with the accompanying drawings, wherein:
Figure 1 is a principle diagram of an electrowetting display structure;
Fig. 2 is a schematic diagram of a display structure according to an embodiment of the invention;
Fig. 3 is a schematic diagram of a display structure according to another embodiment of the invention; and
Fig. 4 is a schematic diagram of a display structure according to a further embodiment of the invention.

### DETAILED DESCRIPTION OF THE EMBODIMENTS

As shown in Fig. 2, it shows an embodiment of a display structure having paper effect according to the invention, the display structure comprises panel glass 1, a display layer 2 and substrate glass 3. In the existing reflection display technology, in order to obtain a diffuse reflection effect, a diffuse reflection layer or Lambert reflector material is required to be arranged under the substrate glass 3; while in the embodiment, a paper layer 4 is arranged under the substrate glass 3, and the panel glass 1, the display layer 2, the substrate glass 3 and the paper layer 4 are stacked in sequence. The paper layer 4 is made by a conventional paper material that allowing the diffuse reflection to the incident light 5. In order to improve durability and reliability, preferably, the paper material is required to have small light transmittance, i.e., have sufficient thickness, in addition, have certain physical strength, for example, have sufficient wear resistance and tear resistance to meet the demands of a preparing process, and the demands of reflection display, for example, the contrast ratio and diffuse reflection required by electronic paper.

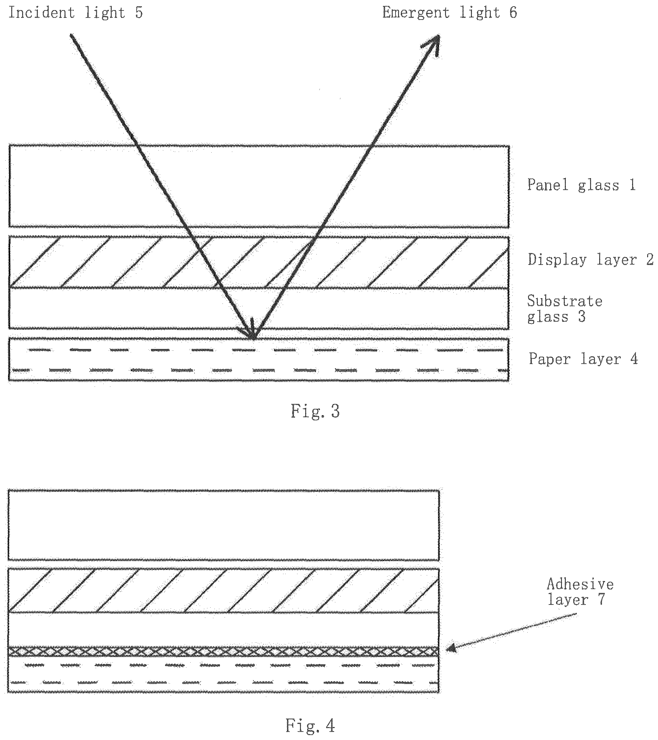

As shown in Fig. 3, it shows another embodiment of a display structure having paper effect according to the invention. When the display layer 2 is in "on" state of the light transmittance, the incident light 5 transmits through the panel glass 1, display layer 2 and substrate glass 3, then a reflection is generated at the surface of reflector, i.e., the paper layer 4, and emergent light 6 of which exits along the original light path to the outside of the panel glass 1. In the display structure, the key problem to be solved is to reduce the interval between the display layer 2 and the reflector. If the interval is too large, the refraction effects among different mediums will become obvious, thus the effective display resolution and display fineness will be limited due to the optical distortion generated by refraction. Therefore, on the basis of the previous embodiment, the thickness of the substrate glass 3 of the display structure is preferably set to be less than 0.5 mm, more preferably less than 0.2 mm.

In another embodiment of the display structure having paper effect according to the invention as shown in figure 4, an adhesive layer 7 having suitable optical properties is used to adhere the paper reflector on the substrate side of the display structure in order to further improve optical performance. Based on the above embodiments, the adhesive layer 7 can be arranged between the substrate glass 3 and the paper layer 4, which is used for adhering the paper layer 4 to the substrate side of the display structure. The optical property of the adhesive layer 7 is adapted to transmit the incident light 5 and emergent light 6 through the adhesive layer 7.

As an example, the above mentioned display structures having paper effect according to the invention can be used in an electrowetting display unit, of which the specific stacking structure is similar to the above display structure having paper effect. In the electrowetting display structure, the display layer 2 is an EFD switching layer 9. An instance of the specific structure of the EFD switching layer 9 can be seen in Fig. 1. In fact, the display structure of the invention can be well matched with the electrowetting display technology to provide an excellent display effect like paper.

According to another aspect of the invention, a method for manufacturing a display structure having paper effect is provided, which comprises the following steps: arranging a display layer 2 on substrate glass 3; arranging panel glass 1 on the display layer 2; arranging an adhesive layer 7 at one side of the substrate glass 3 away from the display layer 2; arranging a paper layer 4 at one side of the adhesive layer 7 away from the substrate glass 3, wherein the optical property of the adhesive layer 7 is adapted to transmit the incident light 5 and emergent light 6 through the adhesive layer 7. The thickness of the substrate glass 3 of the display structure can be configured to be preferably less than 0.5 mm, more preferably less than 0.2 mm. Preferably, the paper layer 4 comprising a paper material is used as a reflector and enables a diffuse reflection from the incident light 5.

The display structure and manufacturing method therefor according to the invention can be used for any non-transparent display technology, including but not limited to electrowetting display system, electro fluidic display system, electrophoretic display system, in-plane switching display, electro-osmosic display system and liquid crystal display.

The descriptions mentioned above are only preferable embodiments of the invention, and the invention is not limited thereto, other embodiments also belong to the protection scope of the invention as long as they can achieve the technical effects of the invention using the same technical means. Various modifications and changes can be made to the technical solutions and/or embodiments within the protection scope of the invention. Although individual technical features are cited in different claims, embodiments sharing these features can also be contained in the invention.

## Claims

1. A display structure having paper effect, comprising panel glass, a display layer and substrate glass, wherein a paper layer is arranged under the substrate glass, and the panel glass, the display layer, the substrate glass and the paper layer are stacked in sequence.

2. The display structure having paper effect according to claim 1, wherein the paper layer comprises paper used as a reflector which enables a diffuse reflection from the incident light.

3. The display structure having paper effect according to claim 1, wherein the thickness of the substrate glass is less than 0.5mm.

4. The display structure having paper effect according to claim 1, wherein an adhesive layer for adhering the paper layer to a substrate side of the display structure is arranged between the substrate glass and the paper layer.

5. The display structure having paper effect according to claim 4, wherein the optical property of the adhesive layer is adapted to transmit the incident light and emergent light to penetrate through the adhesive layer.

6. An electrowetting display structure, using the display structure having paper effect according to any one of claims 1-5, wherein the display layer is an EFD switch layer.

7. A method for manufacturing a display structure having paper effect, comprising the following steps: arranging a display layer on the substrate glass; arranging panel glass on the display layer; arranging an adhesive layer at one side of the substrate glass away from the display layer; and arranging a paper layer at one side of the adhesive layer away from the substrate glass, wherein the optical property of the adhesive layer is adapted to transmit the incident light and emergent light to penetrate through the adhesive layer.

8. The method for manufacturing a display structure having paper effect according to claim 7, wherein the thickness of the substrate glass is less than 0.5mm.

9. The method for manufacturing a display structure having paper effect according to claim 7, wherein the paper layer comprises paper used as a reflector which enables a diffuse reflection from the incident light.
